# EUROPEAN PATENT APPLICATION

(11) **EP 4 430 956 A1**
(43) Date of publication of application: **18.09.2024**
(21) Application number: 23162324.0
(22) Date of filing: 16.03.2023
(51) Int. Cl.: A23K 10/16, A23K 20/179, A23K 50/80

(54) **PELLET FOR FEEDING OF AQUATIC SPECIES**

(71) Applicant: FjordAlg AS, 6884 Øvre Årdal (NO)
(72) Inventor: OSSENKAMP, Gabriel, 3048 Drammen (NO)
(74) Representative: AWA Sweden AB

(57) **Abstract**

The present invention is related to a pellet comprising an oil comprising natural 3S:3S'-astaxanthin being present as a mixture of free astaxanthin, astaxanthin monoester and astaxanthin diester, wherein the 3S:3S'-astaxanthin has an *all-E* isomer content of at least 60% and said natural 3S:3S'-astaxanthin is obtained from microorganisms.

## Description

### Technical field of the invention

The present invention is related to a pellet comprising an oil comprising natural 3S:3S'-astaxanthin and to the use thereof for feeding of aquatic species.

### Background of the invention

The carotenoid astaxanthin is a strictly necessary feed ingredient in the aquaculture of salmonid fish (various salmon species e.g. Atlantic salmon (*Salmo solar*), King/Chinook salmon (*Oncorhynchus tshawytscha*)*,* trouts such as trout (*Salmo trutta*), Rainbow trout (*Oncorhynchus mykiss*) or Arctic char (*Salvelinus alpinus*))*,* as the fish cannot synthesise the compound so it needs to be supplied in the feed. Astaxanthin supports the general health and wellbeing of the fish and provides the characteristic pink pigmentation of the flesh common to salmonid species. The pigmentation of the fillet is seen as one of the main quality indicators in the consumer market.

Astaxanthin also provides the pigmentation of crustaceans, which generally have an ability to synthesise astaxanthin from other precursor carotenoids in their feed. However, a direct supply of astaxanthin to these species under aquaculture conditions may provide health benefits and imparts additional pigmentation.

Thus, there exists a market for astaxanthin preparations for these purposes with an approximate size of 200-300 tonnes of pure astaxanthin per year, where the astaxanthin is supplied to the target species mixed in with the feed that is typically a pelletized dry feed, with an astaxanthin concentration in the finished feed typically between 20 and 200 ppm. As consumer markets for fish and crustaceans mature there is an increasing interest in supplying the astaxanthin of a natural origin rather than chemically synthesised, as this can be seen as a higher quality and avoids labelling requirements in some jurisdictions. Naturally produced astaxanthin is in addition from a renewable source which may mean a lower environmental footprint.

The sources of astaxanthin for the carnivorous *Salmo salar* in the wild during their sea phase are mainly crustaceans such as copepods, *Calanus* species and decapods. In all these species the astaxanthin is present as astaxanthin fatty acid esters dissolved in lipid bodies and/or deposited in the crustacean shell, where it however has low bioavailability. Thus, oil bodies with dissolved esterified astaxanthin can be considered the primary natural conduit for astaxanthin from lower trophic levels to wild *Salmo salar.* The microalgae *Haematococcus pluvialis* is a source of natural astaxanthin dissolved in lipid bodies. *H. pluvialis* is able to produce a large amount of oils. Particularly, under stress conditions, a significant association has been detected for triacylglycerol and astaxanthin accumulations in *H. pluvialis.* 100% of the astaxanthin from *H. pluvialis* is the 3S:3'S stereoisomer in the form of a mixture of esters and diesters. The 3S:3'S stereoisomer is also the one that dominates in wild Atlantic salmon. This stereochemical match between astaxanthin from *H. pluvialis* and the isomer that dominates naturally is an additional argument for the desirability of a natural pigmentation source.

Furthermore, astaxanthin can exist in a variety of geometrical isomers, where a high content of the *all-E* isomer in the feed is particularly desirable for salmonids due to its superior apparent digestibility coefficient (ADC) compared to the Z isomers. This has been demonstrated in Atlantic salmon, in Rainbow trout and in Arctic char. Native astaxanthin from *Haematococcus pluvialis* has a high proportion of *all-E* isomer, typically above 80%. Thermal treatment is a main route to degradation from the desirable *all-E* isomer to the less desirable Z isomers (9-Z, 13-Z).

During the typical industrial production of aquaculture feed pellets heat is applied in several process steps: pre-conditioning of the dry ingredients with steam, extrusion at ca 100-130 °C followed by drying with warm air. Thus, the heating steps potentially degrade the desirable *all-E* isomer to the less desirable Z-isomers.

Astaxanthin esters are generally considered more stable in storage and processing than free astaxanthin.

It would thus appear beneficial for the pigmentation of salmonids to provide astaxanthin dissolved in oil bodies (to match the natural conduit), in the 3S:3'S stereochemistry (to match the natural occurrence in Atlantic salmon), in esterified form (to provide stability and oil solubility, see below) with as much astaxanthin as possible in the *all-E* form (to provide high digestibility).

Attempts have been made to provide oily solutions of astaxanthin starting with synthetic astaxanthin, which might be beneficial due to a lower cost than natural sources. Free astaxanthin is not amenable to this approach, as described in the background of the patent publication WO2009027499A2.

It was thus explored the use of esterified astaxanthin instead of free astaxanthin as a basis for stable oily preparations, but the *all-E* content was limited to max 80% as the astaxanthin esters crystallised at higher *all-E* contents and astaxanthin concentrations above 1,8-2 wt% as discussed in WO20101002226. Additionally, the naturally occurring fatty acid esters of astaxanthin were not amenable to this route where milling of the compound is an important step, as the fatty acid astaxanthin esters proved too waxy to be milled. The oily solutions developed were thus based on more complex compounds based on "crispier" esters amenable to milling as described in EP 2 188 250.

Thus, approaches to oily preparations starting with synthetic astaxanthin are limited by the amount of *all-E* astaxanthin available and require particular esters that are not naturally occurring, and also do not provide the singular stereoisomer that is most desirable. Attempts to instead provide such an aquaculture feed pellet based on an oily solution of natural starting materials have been met with limited success. *Calanus* oil (3S:3'S fatty acid esters) was dissolved in the oil mix used for oil coating of feed pellets to Atlantic salmon and the pigmentation results compared with synthetic astaxanthin. It was necessary to use 60 ppm astaxanthin from the *Calanus* oil-based product to provide the same pigmentation as with 20 ppm synthetic astaxanthin during 181 days of growth of post-smolt Atlantic salmon starting at ca 300 g, whereas the 60 ppm synthetic preparation gave a much higher pigmentation level than the 20 ppm *Calanus* oil. The necessary three-fold higher astaxanthin dosing to achieve sufficient pigmentation makes this approach commercially unattractive. Thus, it is desirable to provide an aquaculture feed pellet comprising a natural astaxanthin source, where the astaxanthin is present as an oily preparation (to match the natural conduit, easy to handle and to facilitate application post-extrusion) in an esterified form (to render it oil-soluble and stable during processing and storage), as a specific stereoisomer (to match the dominant stereoisomer in the wild fish species, 3S:3'S for Atlantic salmon and Rainbow trout) and with a high proportion of *all-E* isomer (to provide high bioavailability).

### Summary of the invention

Thus, in view of the above, the present invention is related to a pellet comprising an oil comprising natural 3S:3S'-astaxanthin being present as a mixture of free astaxanthin, astaxanthin monoester and astaxanthin diester, wherein the 3S:3S'-astaxanthin has an *all-E* isomer content of at least 60% and said natural 3S:3S'-astaxanthin is obtained from microorganisms.

According to the present invention and in view of the experiments provided herein, there has been provided a pellet suitable for aquaculture feed, said pellet provided with an oil of *Haematococcus pluvialis* esters (mostly 3S:3'S monoester with high content of *all-E* astaxanthin). It has been surprisingly found that firstly in this way a pellet with a high percentage of *all-E* astaxanthin retained could be obtained and secondly that a 40 ppm concentration of the natural astaxanthin preparation in the pellet could provide the same level of flesh pigmentation as 60 ppm of a natural product based on *Paracoccus carotinifaciens* in Atlantic salmon reared for 200 days under production conditions from 0,9 kg to commercial slaughter size of 4,3 kg and thirdly the pellet improved the gaping of the resulting salmon fillets after storage on ice.

### Brief description of the drawings

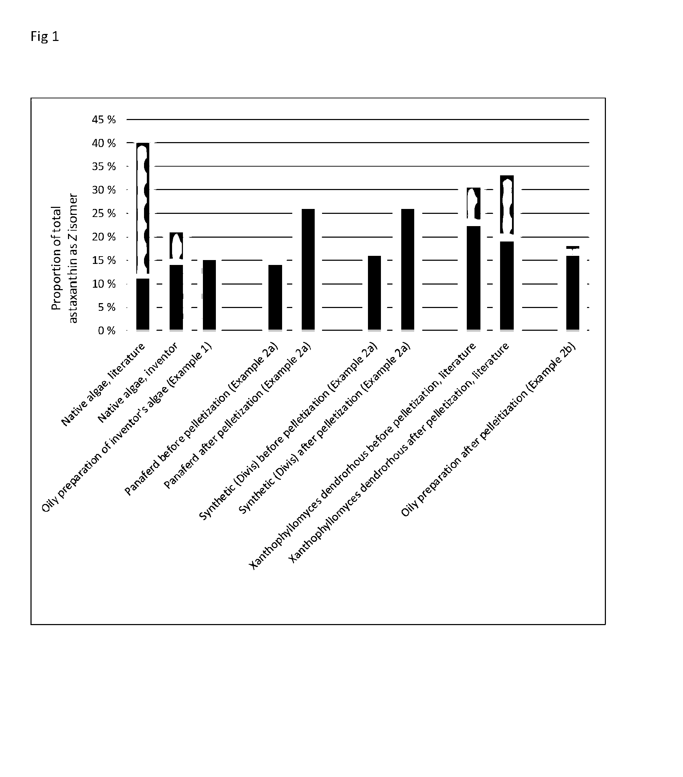

Figure 1 shows the proportion of total astaxanthin present as Z-isomer (9-Z or 13-Z) for the products of Example 1, 2a and 2b, as indicated in the legend, including literature values for reference. Grey areas show the range of variation measured or reported in literature. The first group of bars show the typical range of proportion of Z-isomers in native biomass used by the inventor and as reported in literature and how this is retained in the oily preparations used in this invention. The next 2 groups of bars show how the proportion of Z isomers increases during pelletization of both Panaferd and synthetic astaxanthin and in our experiments. The next pair of bars shows the effect of pelletization on the proportion of ***Z*** isomers in another commercial source of natural astaxanthin, *Xanthophyllomyces dendrorhous,* as reported in literature. The last bar shows how the proportion of ***Z*** isomers is unchanged when using the oily preparations according to this invention.

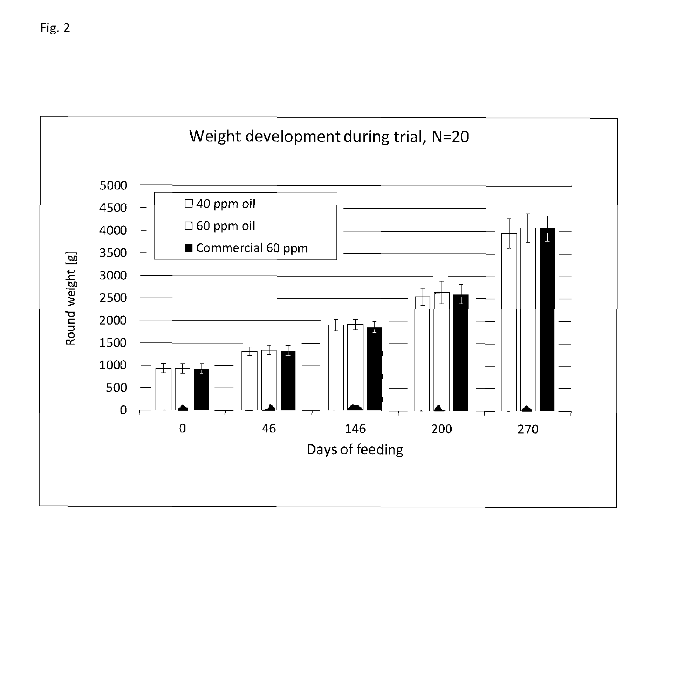

Fig 2: Shows the even development of the round weight during the course of the trial (Example 3). Average round weight of 20 individuals weighed at each sampling point. Error bars represent the standard deviation in each sample. At the starting point 20 individuals were sampled and this was assumed to be representative for the three pens employed.

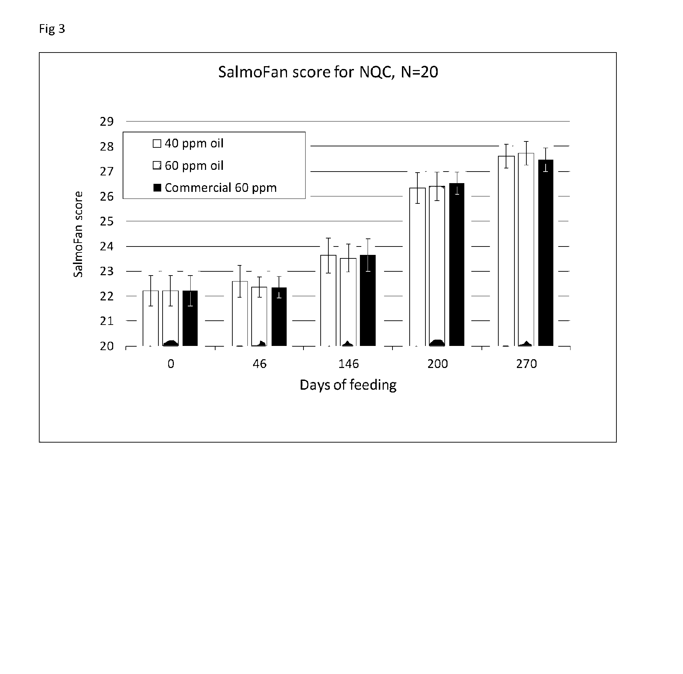

Fig 3: Shows the development of the average SalmoFan score (N=20) of the NQC (Norwegian Quality Cut) part of the fillet during the course of the trial (Example 3). Error bars represent the standard deviation in each sample. At the starting point 20 individuals were sampled and this was assumed to be representative for the three pens employed.

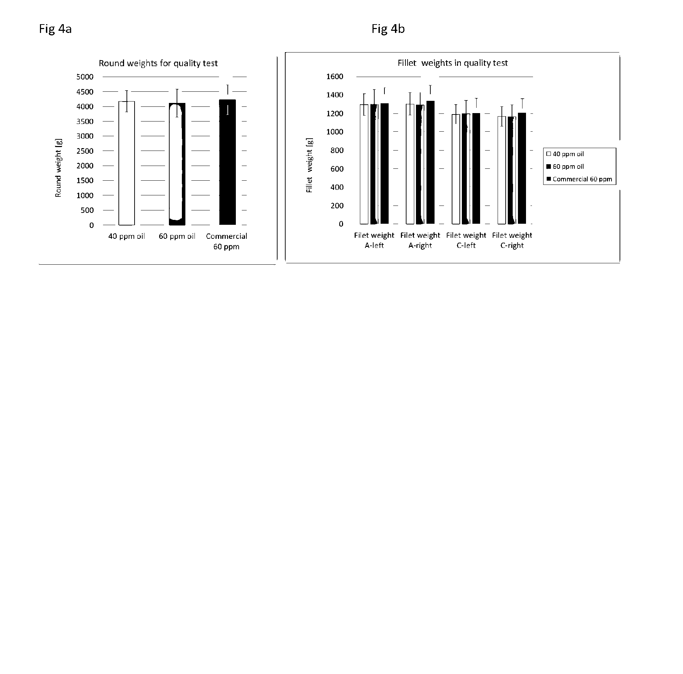

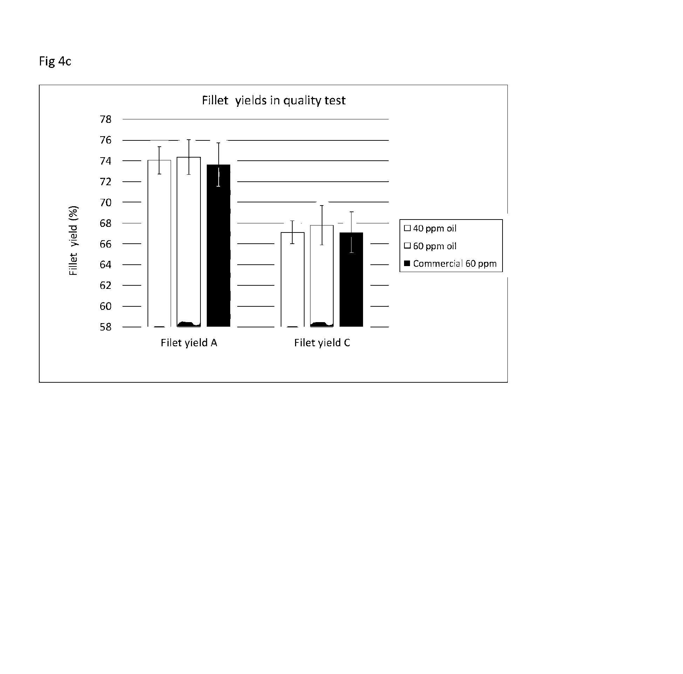

Fig 4: Shows the results relating to fillet yield after storage on ice (Example 4). 4a shows the average round weight and standard deviation of the 20 individuals from which the fillets were cut. 4b shows the average weights of the resulting types of fillets and its standard deviation and 4c shows the average fillet yield calculated as fillet weight/round weight and its standard deviation.

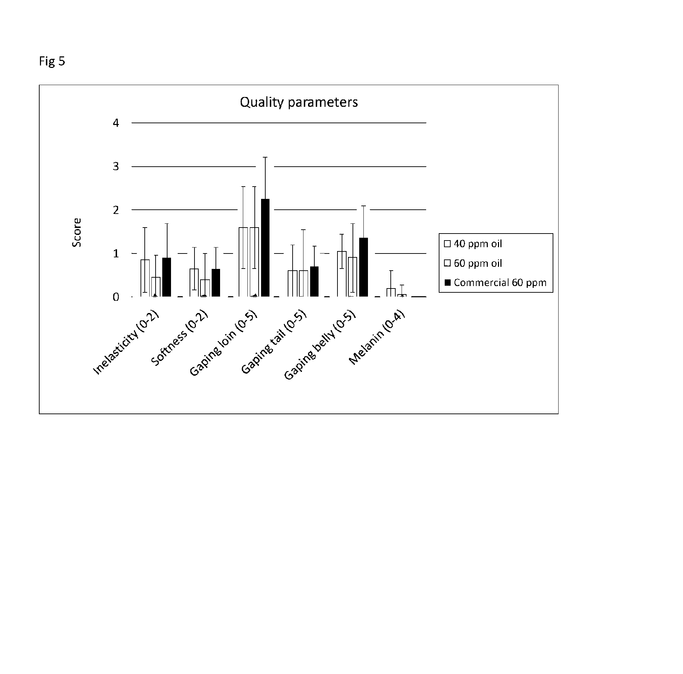

Fig 5: Shows the results relating to the quality parameters of the fillets after storage on ice for 96 h (Example 4). Quality parameters are determined by a trained panel on a scale from 0-2 (inelasticity and softness - tested by response to pressing the fillet with the finger), 0-5 (gaping of tail, belly and loin, visual inspection), 0-4 (size of melanin spots), where 0 is the best score in all cases.

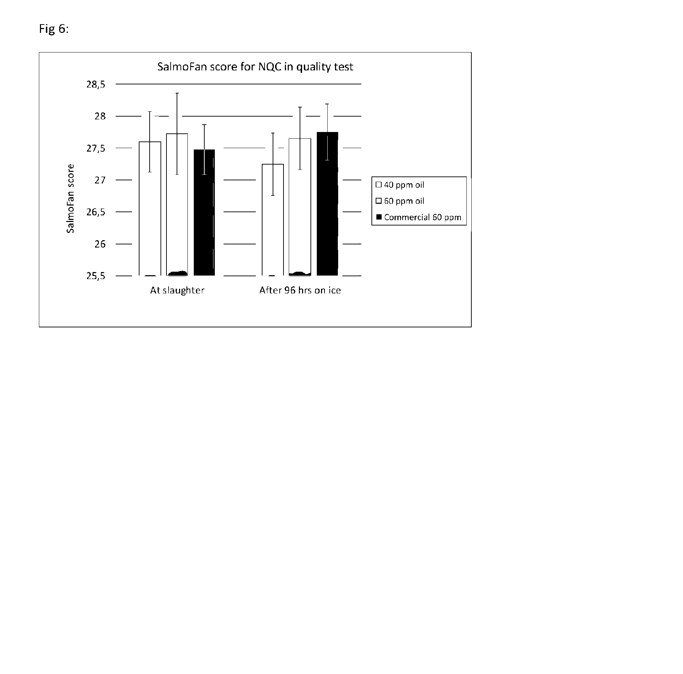

Fig 6: a) Shows the pigmentation of the fillets at the start of the storage on ice and b) the pigmentation of the fillets at the end of the storage on ice (Example 4). Pigmentation determined by SalmoFan score on the NQC

### Definitions

The phrase "pellet" as used herein means a feed pellet conventionally used for feeding of aquatic species. It contains conventional ingredients as used within the art in addition to the oil comprising natural 3S:3S'-astaxanthin being present as a mixture of free astaxanthin, astaxanthin monoester and astaxanthin diester, wherein the 3S:3S'-astaxanthin has an *all-E* isomer content of at least about 60% and said natural 3S:3S'-astaxanthin.

### Detailed description of the invention

According to the present invention there has been provided a pellet comprising an oil comprising natural 3S:3S'-astaxanthin being present as a mixture of free astaxanthin, astaxanthin monoester and astaxanthin diester, wherein the 3S:3S'-astaxanthin has an *all-E* isomer content of at least 60% and said natural 3S:3S'-astaxanthin is obtained from microorganisms. It has been shown that in the pellet according to the invention the proportion of the desirable *all-E* isomer content can stay unchanged in the course of pellet production without degrading to the undesirable Z isomer. This leads to a beneficial flesh pigmentation of aquatic species. It has been shown in the examples that a 40 ppm concentration of the natural astaxanthin pellet according to the invention could provide the same level of flesh pigmentation as 60 ppm of a natural product based on *Paracoccus carotinifaciens* in Atlantic salmon reared for 200 days under production conditions from 0,9 kg to commercial slaughter size of 4,3 kg.

In an aspect of the invention, said microorganism from which natural 3S:3S'-astaxanthin is obtained from is selected from the group consisting of microalgae, yeast, and bacteria. Thus, the desirable natural 3S:3S'-astaxanthin being present as a mixture of free astaxanthin, astaxanthin monoester and astaxanthin diester, wherein the 3S:3S'-astaxanthin has an *all-E* isomer content of at least 60%, may be obtained from any available microorganism source as long as the natural 3S:3S'-astaxanthin being present as a mixture of free astaxanthin, astaxanthin monoester and astaxanthin diester, wherein the 3S:3S'-astaxanthin has an *all-E* isomer content of at least 60%.

In an aspect the microalgae is selected from the group consisting of the genus *Haemotococcus.* In an embodiment the microalgae is selected from the group consisting of the species *Haemotococcus pluvialis* and *Haemotococcus lacustris and Haemotococcus rubens* and *Haemotococcus rubicundus.* It may also be selected from other microalgae where the astaxanthin is present in an esterified in oil bodies form such as *Chlorella zofingiensis* or members of the Volvocales family.

In an aspect of the invention the oil is selected from the group consisting of rapeseed oil, fish oil, soybean oil, sunflower oil, corn oil, linseed oil, olive oil, camelina oil and mixtures thereof, i.e. dietary important long-chain triglycerides, of the same type that accumulate in the astaxanthin containing oil bodies of *Haematococcus spp.* The oil may also be selected from oil of microbial sources such as algae oil, e.g. from *Schizochytrium* species or *Botryococcus* species or *Crypthecodinium* species.

Another benefit of the invention by selecting an oil from the aforementioned group, is that use of solvents, such as ethanol or other organic solvents commonly used for extractions, which may present health risks due to residues or safety hazards when handling them, are entirely avoided.

It is desirable that the astaxanthin containing oil phase is essentially free from dispersed particle and display rheological properties that characterize triglyceride oils, to facilitate the mixing of it with other oil components that are typical ingredients in aquafeed pellets such as fish oil, rapeseed oil, sunflower oil and camelina oil. The oil may be present in said pellet as a component of several other conventional components, e.g. the oil comprising natural 3S:3S'-astaxanthin being present as a mixture of free astaxanthin, astaxanthin monoester and astaxanthin diester, wherein the 3S:3S'-astaxanthin has an *all-E* isomer content of at least 60% and said natural 3S:3S'-astaxanthin, may for example be applied on the pellet, thereby the oil would be located mainly on the surface of the pellet as a coating.

The oil comprising natural 3S:3S'-astaxanthin being present as a mixture of free astaxanthin, astaxanthin monoester and astaxanthin diester, wherein the 3S:3S'-astaxanthin has an *all-E* isomer content of at least about 60% and said natural 3S:3S'-astaxanthin is a solution. This means there is no precipitation, sedimentation or similar factors to consider when storing and mixing with other components, e.g. when using half a container of the product.

The oil enables direct and easy mixing with the other oils that are an integral part of the fish feed recipe without the need for phase transfer from water to oil, which is typically needed if one wants to transfer the typical synthetic cold water-soluble preparations that dominate on the market and requires high shear mixers and the presence of a water phase, which also raises the hygienic demands. The absence of a solid phase in the oil preparation also removes the need for keeping such particles suspended and homogenously distributed and assists in the preparation of a homogenous mixing-in of this micro-ingredient and ensures Newtonian mixing behaviour. It avoids having to handle potentially hygroscopic dry formulations which may form lumps, and it avoids the need for dispersion aids etc.

The processing to "collect" the astaxanthin-containing oil bodies in the microalgae cells directly from wet biomass keeps the astaxanthin in the oil phase and removes the need for drying the biomass. Drying of the biomass is necessary if employing extraction methods such as solvent or supercritical CO2 extraction and drying is also needed if the biomass is to be used in dried form, either directly in the feed, or as a suspended dry solid in oil. Avoiding the drying step is beneficial as it avoids astaxanthin losses during the drying process due to the heat applied, and it also saves energy, (e.g. to dry a biomass with 18% solids in the dry weight, as is typical for an algae centrifuge, (ca 4,5 kg water per kilo biomass) requires approximately 6,8 kWh/kg biomass in drying energy, if using 1,5 kWh/kg water removed as a typical drying energy demand for a general drying process whereas a centrifuging process to separate the oil bodies can be estimated to have an energy demand of 1,3 kWh/kg biomass.

The algae residue centrifuged out can be used as a feed ingredient or as a raw material for other processes to utilize the protein and carbohydrate fraction present in the residue, enabling 100% utilization of the biomass produced.

The provision of the astaxanthin compound in the form of an oil with Newtonian behaviour has the benefit of being very compatible with the pellet production process. None of the dry ingredients need to be changed which might impact the processing properties during the extrusion. The oil is simply mixed with the other oil components, and if these have similar or the same oils as basis the change in physical properties of the overall oil mix through addition of the oily preparation is very minor, and the original pellet production settings and the desired pellet quality can be maintained, and no adaptation of the extrusion process is needed.

In a further aspect of the invention there is provided a pellet, wherein the 3S:3S'-astaxanthin present in the oil has an *all-E* isomer content of at least 60%, e.g. 61%, 62%, 63%, 64%, 65%, 66%, 67%, 68%, or 69%, preferably at least 70%, e.g. 71%, 72%, 73%, 74%, or even more preferably 75%, e.g. 76, 77, 78, or 79%, preferably at least 80%, e.g. 81, 82, 83, 84, 85%. The *all-E* isomer content may also be above 85%, e.g. 86, 87, 88, 89 or 90% etc. In Fig 1, it can be seen that the proportion of Z isomer of example 2b which discloses the pellet of the invention is about 15 % meaning that the resulting *all-E* isomer is about 85%. In an aspect of the invention, said pellet is a feed pellet for animals such as aquatic species.

In another aspect, there is provided use of a pellet as disclosed herein, for feeding animals such as aquatic species such as salmonids during farming of said aquatic species. In an embodiment the aquatic species is selected from salmon, trout, rainbow trout, arctic char shrimp, and crabs and lobster to ensure pigmentation of flesh and/or skin/shell of said species during farming of the same. The feed may naturally also be used in feeding other aquatic species not mentioned here.

It has been shown that a pellet according to the invention could provide the same level of flesh pigmentation at a lower concentration, which effects are beneficial to fish farmers.

### Experimental

### Example 1) Manufacture of oily preparation

An oily preparation of astaxanthin from *Haematococcus* was prepared based on standard processing procedures familiar to those known in the art e.g. Kang & Sim 2008 **Error! Hyperlink reference not valid.**and CN104945297A.

The astaxanthin content of the oily preparation was analysed by HPLC at the University of Stirling, Scotland after hydrolysis of the astaxanthin esters, as familiar to those known in the art. The HPLC was set up to quantify each of the astaxanthin geometrical isomers in the pellet. The sum of the ***Z*** isomers as a proportion of the total astaxanthin (*Z*-isomers plus *all-E* isomer) was calculated.

**Table 1, summary of astaxanthin content by HPLC analysis in H. pluvialis biomass and oily preparation made from it.**

| | Astaxanthin isomer content | | | |
|---|---|---|---|---|
| | All-E [%] | 9-Z [%] | 13-Z [%] | sum of Z, % of total |
| *Haematococcus pluvialis* biomass | Typically 3-5% in sum | | | 11%-40% |
| FjordAlg oily preparation | 0,44 | 0,05 | 0,03 | 15% |

Table 1 shows that the oily preparation manufacturing method retains the high proportion of *all-E* isomer in the native biomass and provides an oil with a high proportion of *all-E* natural astaxanthin.

### Example 2a: preparation of feed pellet

A standard commercial salmon grow-out feed with a high proportion of plant matter was prepared by FôrTek at NMBU in Ås, Norway, using a laboratory extruder with a capacity of ca 30 kg/h. Synthetic astaxanthin (Divi's) and natural astaxanthin from *Paracoccus carotinifaciens* (Panaferd), were both were added to a level of ca 65 ppm in the dry mix before pelletization.

Samples were taken of the dry feed mix before the pelletization and of the pellet after pelletization (before coating). The samples were analysed by HPLC as described above, modifying the extraction procedure to account for the feed matrix and much lower concentration, as familiar to those known in the art.

The results of the astaxanthin analyses are given in Table 2a

| | In ingredient mix before pelletization | | | | In pellet after pelletization | | | |
|---|---|---|---|---|---|---|---|---|
| | All-E [ppm] | 9-Z [ppm] | 13-Z [ppm] | sum of Z, % of total | All-E [ppm] | 9-Z [ppm] | 13-Z [ppm] | sum of Z, % of total |
| Panaferd | 69,51 | 2,43 | 8,61 | 14% | 55,02 | 10,6 | 8,34 | 26% |
| Divi's synthetic astaxanthin | 78,29 | 3,74 | 11,33 | 16% | 54,87 | 9,89 | 9,63 | 26% |

Table 2 shows that the content of *all-E* astaxanthin is reduced during pelletization while the increase in content of Z-isomers is largest for the 9-Z isomer. It is known from literature that in Atlantic salmon, Rainbow trout and Arctic char the *all-E* isomer has the highest apparent digestibility coefficient, while 9-*Z* has the lowest.

Thus the pelletization process turns the most desirable astaxanthin isomer into the least desirable astaxanthin isomer, and it would be beneficial to avoid the effects of the thermal treatment on astaxanthin during pelletization.

### Example 2b: preparation of feed pellet

Three varieties of standard commercial salmon grow-out feed with a high proportion of plant matter were prepared by a salmon feed company using a pilot scale extruder. Apart from the astaxanthin source, the three feeds were identical. For Feed 1 and 2 (oily preparation astaxanthin source) the astaxanthin was applied with the oil after extrusion, whereas for Feed 3 Panaferd was added during the mixing of the dry ingredients preextrusion to provide 60 ppm astaxanthin in the finished feed (similar to Example 2a).

Thus, for Feed 1 the pellet was coated with a mix of rapeseed and fish oil and the oily astaxanthin preparation to provide 40 ppm astaxanthin in the fished product. For Feed 2 the coating mix of fish oil and rapeseed oil was reduced somewhat in rapeseed oil and increased in astaxanthin preparation to afford 60 ppm astaxanthin in the finished feed product. For Feed 3 the same dry feed recipe and production method was used as for Feed 1 and 2, with the modification that the coating oil mix contained no added astaxanthin source.

The three feeds were produced in two batches using 7 mm and 9 mm pellet size. Some initial trial batches using Carophyll pink synthetic astaxanthin instead of Panaferd were also produced in the same manner as above.

Samples of the finished pellets were taken after pelletization. The samples were analysed by HPLC as described in Example 2a.

The results of the astaxanthin analyses are given in Table 3 below.

| | | In pellet | | | |
|---|---|---|---|---|---|
| | | All-E [ppm] | 9-Z [ppm] | 13-Z [ppm] | sum of Z, % of total |
| Oil-based preparation 40 ppm | Batch 7 mm | Sum 33,3 | | | N.A. |
| | Batch 9 mm | 29,35 | 2,82 | 2,93 | 16,4% |
| Oil-based preparation 60 ppm | Batch 7 mm | Sum 42,5 | | | N.A. |
| | Batch 9 mm | 41,66 | 4,06 | 4,25 | 16,6% |
| Panaferd | Batch 7 mm | Sum 50,3 | | | N.A. |
| | Batch 9 mm | Sum 53,3 | | | N.A. |
| Trial batch oil coat 50 ppm | | 67,37 | 8,04 | 4,46 | 15,7% |
| | | | | | |

The results in Table 2 and 3 can be summarised as in Figure 1

### Example 3: Pigmentation of Atlantic salmon with the feed from Example 2b

Feed 1-3 were transported to LetSea AS in Dønna, Norway, where they were fed to Atlantic salmon as follows:
Three pens of 5 x 5 x 5 m each were stocked with 200 fish each in November 2021, with the fish selected to provide as similar weight distributions in the three pens as possible at start.
Prior to this the fish had been on a standard commercial feed including synthetic astaxanthin and were beginning to deposit pigment.

Samplings were carried out at the start, in January 2022 (day 46), April 2022 (day 145), June 2022 (day 200) and August 2022 (day 270). At each sampling event 20 individuals were killed, weighed and the pigmentation of the NQC part of their fillets measured using the SalmoFan score by two independent trained scorers. The thermal growth coefficient during the whole experiment was generally 3,1-3,5, and the mortality in each pen was under 2%. Sea water temperature, oxygen content and salinity were monitored daily and varied as natural with no particular events. There was thus good feed intake and low mortality in the trial indicating low background noise. De-licing and pen washing operations were carried out during the summer months as required.

### Results:

| | Average fsh round weight [g], N=20 | | | Average SalmoFan score for NQC, N=20 | | |
|---|---|---|---|---|---|---|
| | Feed 1-40 ppm oil | Feed 2 - 60 ppm oil | Feed 3 - 60 ppm Panaferd | Feed 1-40 ppm oil | Feed 2 - 60 ppm oil | Feed 3 - 60 ppm Panaferd |
| Start | 932 | | | 22,2 | | |
| Day 46 | 1310 | 1342 | 1335 | 22,2 | 22,4 | 22,4 |
| Day 145 | 1902 | 1919 | 1857 | 22,6 | 23,5 | 23,7 |
| Day 200 | 2542 | 2639 | 2593 | 23,6 | 26,4 | 26,5 |
| Day 270 | 3955 | 4073 | 4069 | 26,3 | 27,7 | 27,5 |

The results are also displayed in Figure 2 and Figure 3.

In the figures it can be seen that a 40 ppm concentration of the natural astaxanthin preparation in the pellet provided the same level of flesh pigmentation as 60 ppm of a natural product based on *Paracoccus carotinifaciens* in Atlantic salmon reared for 270 days under production conditions from 0,9 kg to commercial slaughter size of 4,3 kg.

### Example 4: Quality of fillets from Example 3

20 fillets cut from the fish in Experiment 3 were stored with the flesh side down on ice for 96 hours. After the storage period a standard "Industrial Test" was performed at LetSea, measuring pigmentation by SalmoFan score (as in Example 3) and additionally the fillet yield (fillet weight divided by round weight), and quality parameters related to inelasticity, softness, gaping and melanin spots were assessed on a scale from 0-2 (gaping 0-5, melanin is scored following Nofima's scoring scale: 0- no melanin spots; 1- diffuse melanin spots; 2-melanin spots are less than 3 cm; 4- Melanin spots between 3 and 6 cm) where 0 is the best score.

### Results

**Table 4. The average of the quality parameters of 20 fillets after 96 h storage on ice The results in Table 4 are also shown in Figures 4 and 5. It demonstrates that the pigmentation product according to the invention does not affect fillet yield or pigmentation upon storage, and in tendence provides better quality parameters for texture.**

| | FjordAlg 40 ppm | FjordAlg 60 ppm | Panaferd 60 ppm |
|---|---|---|---|
| Sample average round weight [g] | 3970,6 | 3918 | 4023,7 |
| Filet weight A-left [g] | 1295,7 | 1300,3 | 1310 |
| Filet weight A-right [g] | 1303,8 | 1290,3 | 1338,2 |
| Filet weight C-left [g] | 1188,8 | 1198,1 | 1205,9 |
| Filet weight C-right [g] | 1167,2 | 1163,8 | 1207,9 |
| Inelasticity (0-2) | 0,85 | 0,45 | 0,9 |
| Softness (0-2) | 0,65 | 0,4 | 0,65 |
| Gaping loin (0-5) | 1,6 | 1,6 | 2,25 |
| Gaping tail (0-5) | 0,6 | 0,6 | 0,7 |
| Gaping belly (0-5) | 1,05 | 0,9 | 1,35 |
| Salmofan | 27,25 | 27,65 | 27,75 |
| Melanin (0-4) | 0,2 | 0,05 | 0 |
| Filet yield A (%) | 74% | 74% | 74% |
| Filet yield C (%) | 67% | 68% | 67% |

## Claims

1. A pellet comprising an oil comprising natural 3S:3S'-astaxanthin being present as a mixture of free astaxanthin, astaxanthin monoester and astaxanthin diester, wherein the 3S:3S'-astaxanthin has an *all-E* isomer content of at least 60% and said natural 3S:3S'-astaxanthin is obtained from microorganisms.

2. A pellet composition according to claim 1, wherein said microorganism is selected from the group consisting of microalgae, yeast, and bacteria.

3. A pellet according to claim 2, wherein the microalgae is selected from the group consisting of *Haemotococcus, Chlorella* and Volvocales.

4. A pellet according to claim 3, wherein the microalgae is selected from the group consisting of *Haemotococcus pluvialis, Haemotococcus lacustris, Haemotococcus rubens and Haemotococcus rubicundus*

5. A pellet according to any one of claims 1-4, wherein the oil is selected from the group consisting of rapeseed oil, fish oil, soybean oil, sunflower oil, corn oil, linseed oil, olive oil, camelina oil and mixtures thereof, and oils of microbial sources.

6. A pellet according to any one of claims 1-5, wherein the 3S:3S'-astaxanthin present in the oil has an *all-E* isomer content of at least 70%, preferably at least 80%, preferably at least 85%.

7. A pellet according to any one of claims 1-6, wherein said pellet is a feed pellet for animals such as aquatic species.

8. Use of a pellet according to any one of claims 1-7, for feeding animals such as aquatic species such as salmonids during farming of said aquatic species.

9. Use according to any one of claims 1-8, for feeding of aquatic species selected from salmon, trout, rainbow trout, arctic char, shrimp, crabs, and lobster to ensure pigmentation of flesh and/or skin/shell of said species during farming of the same.
